# EUROPEAN PATENT APPLICATION

(11) **EP 3 412 406 A1**
(43) Date of publication of application: **12.12.2018**
(21) Application number: 18176040.6
(22) Date of filing: 05.06.2018
(51) Int. Cl.: B23Q 7/10, B23C 3/35

(54) **MAGAZINE FOR KEY BLANK DISPENSING SYSTEM**

(30) Priority: 06.06.2017 GB 201708957
(71) Applicant: Iconx Limited, Brighton, East Sussex BN1 1AX (GB)
(72) Inventor: Horsfall, David Anthony, Silsden, Keighley BD20 0EF (GB); Crowther, Polly, Silsden, Keighley BD20 0EF (GB)
(74) Representative: Sales, Robert Reginald

(57) **Abstract**

A magazine (10) for receiving a plurality of lever key blanks (20) stacked vertically one above each other in a substantially identical alignment to each other. The magazine (10) has front and rear ends (22, 24) and first and second sides (26, 28) which define a vertically extending profiled opening (30). In plan view the profiled opening (30) has a rear part (32) to locate a lever key blank head and a main part (36) of lesser width than the rear part (32), extending forwards from the rear part (32) to locate a lever key blank shank (38). In plan view the profiled opening (30) also has a side part (40) on the first side (26) towards the front end to locate the blade (42) of a lever key blank (20), such that a lever key blank (20) can only be located in the profiled opening (30) in one orientation with the key blank blade (40) locating in the first side part (40). The lower end of the magazine (10) is configured such that a lowermost lever key blank (20) only can be dispensed therefrom in a forwards direction.

## Description

This invention concerns a lever key blank storage magazine, a key blank dispensing system, and especially such a system for an automatic key cutting machine.

In a number of applications and especially in automatic key cutting machines, it is required to have a key blank dispensing system which enables a key blank to be dispensed when required in a desired orientation. Key blanks for two main types of keys are principally provided in such systems.

One type of key blank is for producing a lever key. Such a blank generally includes a head which is usually flat. A shank which is usually cylindrical extends from the head. Spaced from the head a collar of larger diameter is generally provided around the shank, with a blade in the form of a flat projection which is usually parallel to the head, extending sideways from the shank on the opposite side of the collar to the head. The blade can be cut as required to operate a particular lock.

A wide range of different sizes and shapes of key blanks are available, and it is desirable for a system to be usable with such a wide range of key blanks, with the most appropriate respective key blank being cut as required.

According to a first aspect of the invention there is provided a magazine for receiving a plurality of lever key blanks stacked vertically one above each other in a substantially identical alignment to each other, the magazine having front and rear ends and first and second sides which define a vertically extending profiled opening, the profiled opening in plan view having a rear part to locate a lever key blank head; a main part of lesser width than the rear part, extending forwards from the rear part to locate a lever key blank shank; and a side part on the first side only towards the front end to locate the blade of a lever key blank, such that a lever key blank can only be located in the profiled opening in one orientation with the key blank blade locating in the first side side part; the lower end of the magazine being configured such that a lowermost lever key blank only can be dispensed therefrom in a forwards direction.

The side part may extend to the front end such that the lever key blank blade extends forward beyond the front end of the magazine.

The profiled opening main part may be defined by a first wall projecting from the first side at the front end of the profiled opening rear part, and also a second wall spaced forwards therefrom and extending from the second side.

The profiled opening main part may also be defined by a third wall projecting from the first side spaced forwards of the second wall, which third wall is provided at the transition between the main part and the side part.

The magazine may have side walls which extend below the rear, main and side parts to define a forward open slot through which the lowermost lever key blank can be dispensed in a forwards direction.

Blanking formations may be provided in or adjacent the profiled opening rear part to selectively locate blanking members to reduce the size of the rear part.

The blanking formations may be in the form of vertically extending slots.

Spacing projections may be provided on the outside of one or more of the magazine side walls to provide a required spacing from an adjacent such magazine.

An abutment member may be provided on the second side opposite the side part of the profiled opening, to prevent a blank being located in the magazine with the ear on the second side.

Mounting formations may be provided on the outside of the magazine to permit mounting of the magazine to an item or fixture, and/or mounting of items to the outside of the magazine. The mounting formations may be in the form of vertically extending channels.

Fixing formations may be provided on the front end of the magazine to permit items to be mounted thereto. The fixing formations may be in the form of vertically extending slots. The interior of the slots may be contoured to engage with a threaded member extending thereinto.

A forward extending part may be provided on the front of the magazine to continue at least part of the forwards open slot to guide lever key blanks extending from the magazine.

Mounting formations may be provided on the magazine rear end, which mounting formations may be in the form of holes.

According to a further aspect of the invention there is provided a lever key blank dispensing system, the system including one or more magazines according to any of the preceding thirteen paragraphs.

Guide members may be provided engageable with lever key blanks being dispensed from the magazine, and the guide members may be provided on the front end fixing formations. The guide members may be in the form of downwardly urged sprung members.

One or more blanking members may be provided located in the blanking formations in the profiled opening.

According to still further aspect of the invention there is provided an automatic key cutting machine including a key blank dispensing system according to any of the above three paragraphs.

An embodiment of the present invention will now be described by way of example only and with reference to the accompanying drawings, in which:-
Fig. 1 is a diagrammatic plan view of a storage magazine according to the invention;
Figs. 2 - 5 are similar views to Fig. 1 of the magazine containing different key blanks;
Fig. 6 is a perspective view of the magazine of Fig. 1;
Fig. 7 is a diagrammatic perspective view of an automatic key cutting machine according to the invention;
Fig. 8 is a diagrammatic plan view of the storage magazine of Fig. 1, and also shows part of the machine of Fig. 7; and
Fig. 9 is a front view of the magazine in part of the machine of Fig. 7 as shown in Fig. 8.

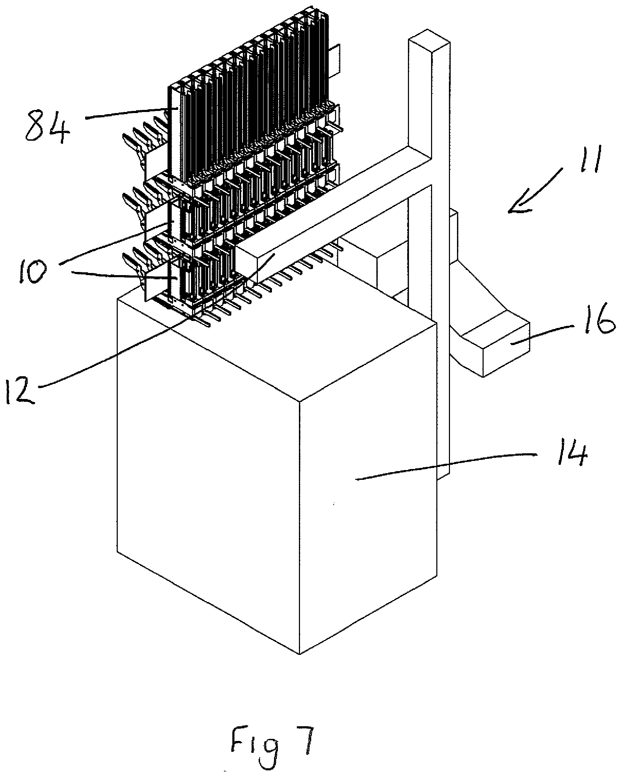

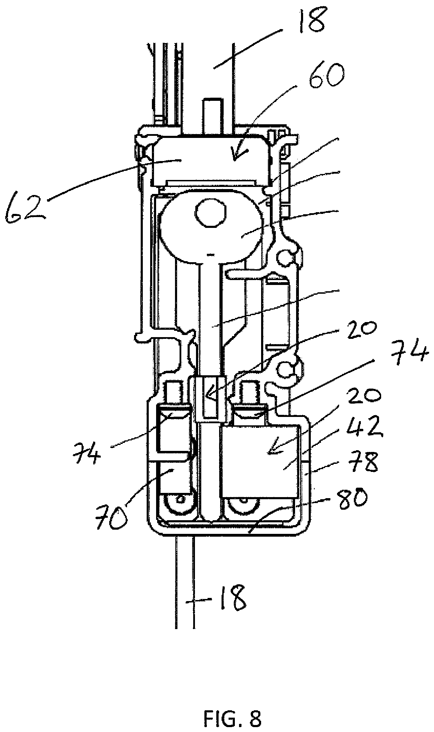

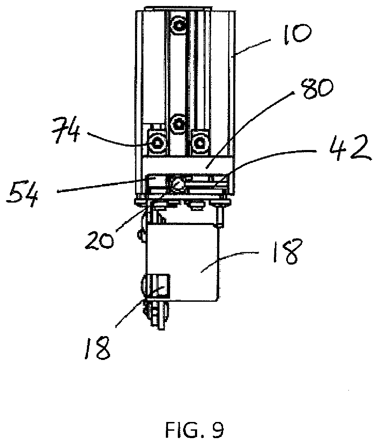

Fig. 7 of the drawings show an automatic key cutting machine 11 which contains a plurality of magazines 10 for holding different key blanks. A blank picking device 12 is provided for selectively taking a blank from a respective magazine 10 and transferring the blank to a key cutting assembly 14, and subsequently taking the cut key to a delivery location 16. Figs. 8 and 9 show part of an assembly 18 for dispensing a key blank from a magazine.

The drawings show a one of the magazines 10 for locating a number of a particular lever key blanks 20 and permitting the lever key blanks 20 to be dispensed one at a time to the picking device 12. The magazine 10 is in the form of a profiled elongate member which may be in the form of an extrusion. The magazine 10 has front and rear ends 22, 24 and first and second sides 26, 28 defining a vertically extending profiled opening 30.

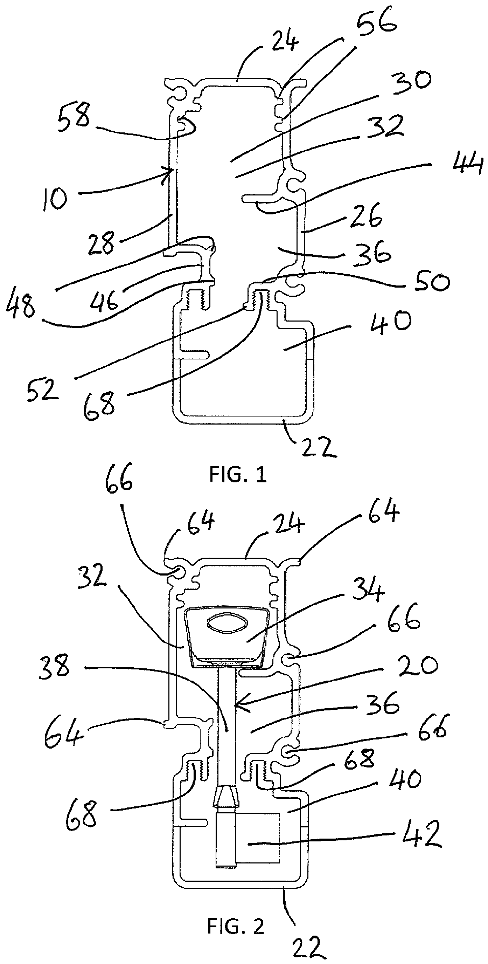

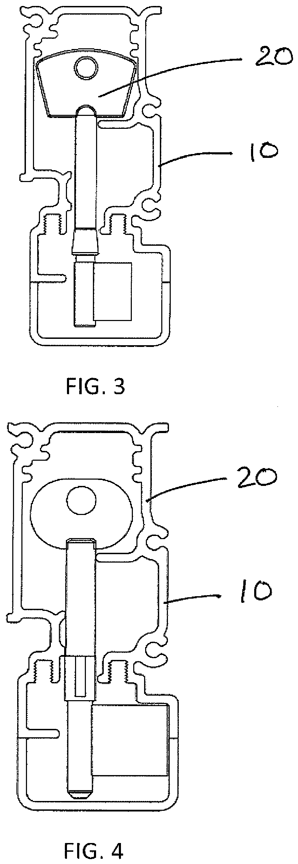

In plan view the profiled opening 30 has a rear part 32 to locate the head 34 of a lever key blank 20, a main part 36 in places of lesser width extending forwards from the rear part 32 to locate a lever key blank shank 38, a side part 40 on one side only towards the front of the magazine 10 to locate part of the blade 42 of a lever key blank 20, with the magazine 10 being configured such that the lever key blank 20 can only be located in the profiled opening 30 in one orientation, such that the blades 42 for all the key blanks 20 are on the same side. This is to the right as shown in Figs. 2 to 5.

The profiled opening main part 36 is defined by a first wall 44 projecting inwardly from the first side 26 at the front end of the rear part 32. The profiled opening main part 36 is also defined by a wall 46 spaced inwardly from the second side 28, which wall 46 has projections 48 at each end thereof extending towards the first side 26. The profiled opening main part 36 is also defined by a projecting part 50 of the first side 26, with a projection 52 pointing towards the second side 28.

The lower end of the magazine 10 defines a forward opening slot 54 as best shown in Fig. 9, allowing a single lowermost lever key blank 20 to be dispensed as required. The magazine side walls 26, 28 extend on each side of the slot 54.

Two pairs of blanking formations 56 each in the form of vertically extending projections defining slots 58 extending from the respective side walls 26, 28, are provided behind the rear part 32 and can slidingly receive a blanking member 60 as shown in Fig. 8 in the form of a strip which extends in and between the respective slots, and has a cranked top part 62 to facilitate handling thereof. One such blanking member 60 is illustrated in Fig. 8, and prevents a lever key blank 20 moving rearwardly beyond a required amount.

Spacing formations 64 are provided respectively one on each outer side wall 26, 28 of the magazine, at the rear 24 of the magazine 10, and another 64 approximately half way towards the front 22 of the magazine on the second side 28. The spacing formations 64 provide correct spacing relative to an adjacent magazine 10 as shown for example in Fig. 7.

Mounting formations 66 in the form of partially closed vertically extending circular openings are provided, one at the rear end of the second side 28, and two spaced along the first side 26. The mounting formations 66 permit mounting of the magazine 10 to an item or fixture, or to other such magazines 10.

A pair of fixing formations 68 are provided in the form of forward open vertical slots with corrugated sides to define threads. One formation 68 is provided on each side at the front of the main part 36 of the profiled opening. The fixing formations 68 permit sprung L-shaped guide members 70 to be provided to be mounted thereto by screws 74 threadingly engaging in the formations 68 to guide a lever key blank 20 as it moves forward out of the magazine 10. As can be seen in Figs. 8 & 9, the lever key blank blade 42 rests on top of the sprung guide member 70 on the first side 26.

A guide member 76 is provided at the front lower end of the magazine 10 and comprises full height side walls 78 interconnected by a front wall 80 with a gap 82 defined beneath the front wall 80 forming part of the slot 54 through which a lever key blank 20 can be dispensed.

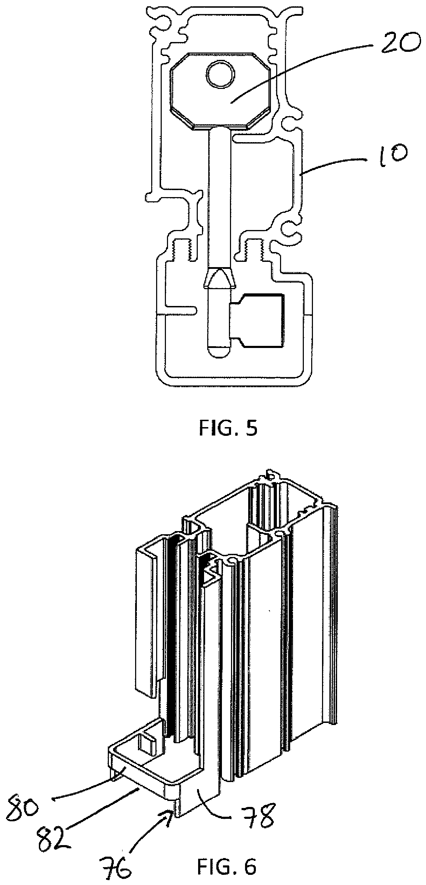

The magazine 10 shown in Fig. 6 is a relatively short magazine and would generally be used for less common key blanks 20. Different heights of magazines can be provided, with taller magazines 84 for more common key blanks 20, as is shown in Fig. 7.

The magazines 10 thus described therefore permit a wide range of different shape and sizes of lever key blanks 20 to be mounted one above each other and dispensed one at a time for instance in an automatic key cutting machine 11. As is indicated blanking members 60 may be provided as required for different sizes and shapes of lever key blanks. Figs. 2 to 5 show the magazine being used with a range of different key blanks 20.

It is to be realised that a wide range of modifications may be made without departing from the scope of the invention. For instance different mounting arrangements may be provided on the magazines and/or guide formations. Different blanking members could be used.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A magazine for receiving a plurality of lever key blanks stacked vertically one above each other in a substantially identical alignment to each other, the magazine having front and rear ends and first and second sides which define a vertically extending profiled opening, the profiled opening in plan view having a rear part to locate a lever key blank head; a main part of lesser width than the rear part, extending forwards from the rear part to locate a lever key blank shank; and a side part on the first side only towards the front end to locate the blade of a lever key blank, such that a lever key blank can only be located in the profiled opening in one orientation with the key blank blade locating in the first side part; the lower end of the magazine being configured such that a lowermost lever key blank only can be dispensed therefrom in a forwards direction.

2. A magazine according to claim 1, in which the side part extends to the front end such that the lever key blank blade extends forward beyond the front end of the magazine.

3. A magazine according to claims 1 or 2, in which the profiled opening main part is defined by a first wall projecting from the first side at the front end of the profiled opening rear part, and also a second wall spaced forwards therefrom and extending from the second side.

4. A magazine according to claim 3, in which the profiled opening main part is defined by a third wall projecting from the first side spaced forwards of the second wall, which third wall is provided at the transition between the main part and the side part.

5. A magazine according to any of the preceding claims, in which the magazine has side walls which extend below the rear, main and side parts to define a forward open slot through which the lowermost lever key blank can be dispensed in a forwards direction.

6. A magazine according to any of the preceding claims, in which blanking formations are provided in or adjacent the profiled opening rear part to selectively locate blanking members to reduce the size of the rear part.

7. A magazine according to claim 5 or claim 6 when dependent on claim 5, in which spacing projections are provided on the outside of one or more of the magazine side walls to provide a required spacing from an adjacent such magazine.

8. A magazine according to any of the preceding claims, in which an abutment member is provided on the second side opposite the side part of the profiled opening, to prevent a blank being located in the magazine with the ear on the second side.

9. A magazine according to any of the preceding claims, in which mounting formations may be provided on the outside of the magazine to permit at least one of: mounting of the magazine to an item or fixture, or mounting of items to the outside of the magazine.

10. A magazine according to claim 5 or any of claims 6 to 9 when dependent on claim 5, in which a forward extending part is provided on the front of the magazine to continue at least part of the forwards open slot to guide lever key blanks extending from the magazine.

11. A lever key blank dispensing system, the system including one or more magazines according to any of the preceding claims.

12. A cylinder key blank dispensing system according to claim 11, in which guide members are provided engageable with lever key blanks being dispensed from the magazine.

13. A cylinder key blank dispensing system according to claim 12, in which the guide members are provided on the front end fixing formations.

14. A cylinder key blank dispensing system according to any of claims 11 to 13 when dependent on claim 6, in which one or more blanking members are provided located in the blanking formations in the profiled opening.

15. An automatic key cutting machine including a key blank dispensing system according to any of claims 11 to 14.
